# EUROPEAN PATENT APPLICATION

(11) **EP 4 843 963 A1**
(43) Date of publication of application: **25.11.2026**
(21) Application number: 25178489.8
(22) Date of filing: 23.05.2025
(51) Int. Cl.: C02F 9/00, C25B 1/04, C25B 9/19, C25B 9/70, C25B 15/02, C02F 1/42, C02F 1/44, C02F 1/461

(54) **ELECTROLYSIS PLANT**

(71) Applicant: Siemens Energy Global GmbH & Co. KG, 81739 München (DE)
(72) Inventor: Do, Nga Thi Quynh, 91056 Erlangen (DE); Hanebuth, Marc, 90482 Nürnberg (DE); Ungerer, Markus, 91083 Baiersdorf (DE)

(57) **Abstract**

The invention is related to an electrolysis plant (1) comprising an electrolyser (3) for the decomposition of reactant water (H₂O) into hydrogen (H₂) and oxygen (O₂) as product gases (5, 6). The electrolyser (3) comprises a number of electrolysis cells with a cell element, in particular a polymer membrane, containing a per- and polyfluorinated alkyl compound, and further comprising a water treatment system (11) which is connected to the process water circuit of the electrolyser (3). The water treatment system (11) has a first purification unit (8) and a second purification unit (12) downstream of the first purification unit (8), wherein the second purification unit is designed for the separation of portions of the per- and polyfluorinated alkyl compound (PFAS) introduced into the process water.

## Description

The invention relates to an electrolysis plant comprising an electrolyser for the decomposition of reactant water into hydrogen and oxygen as product gases

Nowadays, hydrogen is produced by proton exchange membrane (PEM) electrolysis or alkaline electrolysis, for example. The electrolysers produce hydrogen and oxygen from the supplied water with the help of electrical energy. Hydrogen is an environmentally friendly and sustainable energy source. It has the unique potential to implement energy systems, transport and large parts of the chemical industry in a climate-friendly way and without CO₂ emissions. This goal can be achieved if the hydrogen is produced using renewable energies using PEM electrolysis. Large scale electrolysis plants comprising several electrolysers are expected to be installed in the next years and decades.

As part of an electrolysis plant, an electrolyser usually comprises a large number of electrolysis cells, which are arranged adjacent to each other. Water electrolysis is used to break down water into hydrogen and oxygen in the electrolysis cells. In a PEM electrolyser, for example, demineralized water is typically supplied as an educt on the anode side and attached to a proton-permeable membrane (proton exchange membrane; PEM) to hydrogen and oxygen. The water is oxidized to oxygen at the anode. The protons pass through the proton-permeable membrane. Hydrogen is produced on the cathode side. The water is usually pumped from one underside into the anode space and/or cathode space.

In addition to PEM electrolysis, other forms of electrolysis processes are also known, such as alkaline electrolysis, in which other ions like hydroxide anions OH⁻ are transported through a polymer membrane or diaphragm. There are other types of electrolysers in current research in which other ions, e.g. hydroxide ions, selectively pass through the polymer membrane and thus enable charge transport for the electrolysis reaction. The general problem underlying the invention can also be applied to this type of electrolysers.

Electrolysis for green hydrogen production plays a transformative role for achieving climate neutrality. Hydrogen, as a renewable energy carrier, could store energy for the long term and distribute it across various industries. However, the use of PFAS, per- and polyfluoroalkyl Substances, in PEM and Alkaline related electrolysers, as well as in their up- and downstream processes, presents a significant challenge. Additionally, PFAS are utilized in Membrane Electrode Assemblies (MEA), sealing materials, coating materials, gas separation membranes, and other parts. According to the EU position paper on PFAS, achieving a nominal 140 GW of electrolyser capacity using only PEM technology would require up to 1,750 tons of PFAS ionomers for the stacks alone. Although PFAS in certain setups (i.e. in a membrane, sealing) can be fully recovered and recycled at the end of their lifespan, a certain percentage is at risk of being lost during usage due to degradation of individual components and disposed e.g. through water streams. These streams should not be directly disposed to the environment as PFAS can have negative effects on human health and the environment.

The electrolysis process takes place in the so-called electrolysis stack, composed of several electrolysis cells. In the electrolysis stack, which is under DC voltage, highly pure, fully desalinated water is introduced as an educt, whereby two fluid streams consisting of water and gas bubbles - Oxygen O₂ and Hydrogen H₂ - emerge after passing through the electrolysis cells. The respective separation of the water and gas phases in the fluid flows takes place in gas separators.

Due to the harsh electrochemical conditions that can always occur during electrolysis, H₂O₂ or OH radicals can be formed to some extent within the electrolyzer, for example in the area of the electrolysis cells. It is generally known that such species can chemically attack the ionomer or membrane material of PEM electrolyzers in particular, whereby in the latter, for example, fluorides are released as degradation products during such degradation. As mentioned above, this is because the membrane has a fluorine content and consists of PFSA "perfluorosulfic acid", for example. The membrane is a particularly important element for the functionality of the electrolysis cells in PEM electrolysis, so that their service life and their limitation due to degradation effects receive great attention, especially from an economic point of view. Other degradation products are, for example, metal anions, which go into aqueous solution due to oxidative and corrosive attack on the corresponding water-bearing materials and are thus introduced directly into the process water. Thus, in the operation of an electrolysis plant, anions and cations increasingly enter the process water as dissolved salts and contaminate it.

However, in addition to environmental challenges from PFAS-disposal, the purity of the process water is also essential for a long service life of the electrolyser. The process water can contain ions as described above, which are released as a degradation product from the electrolyser stack/cell, such as from the membrane of a PEM electrolysis cell. As part of the further development of a long operating time of PEM electrolysers, it is therefore crucial that the process water is permanently of the highest purity, as the presence of contaminating ions can accelerate the degradation of the stack/cell and the entire system. These effects can cause lasting damage, can limit the service life of an electrolyser and can lead to premature failure and even loss of the electrolyser. It is therefore essential that the ions are removed from the process water as far as possible in order to ensure a very low ion concentration as an upper limit during operation. For this purpose, the process water must be treated accordingly, i.e. deionized, so that fully demineralized water ("demineralized water") or deionate is obtained. In this process, high-purity, fully desalinated water is also continuously added to the process water to compensate for the water consumption caused by the electrolysis process.

In view of these challenges, therefore, the object of the present invention is to specify an electrolysis plant that enables improved operation in terms of service life and safety while being environmentally compatible.

This object is being solved by an electrolysis plant comprising an electrolyser for the decomposition of reactant water into hydrogen and oxygen as product gases, wherein the electrolyser comprises a number of electrolysis cells with a cell element, in particular a polymer membrane, containing a per- and polyfluorinated alkyl compound, and comprising a water treatment system which is connected to the process water circuit of the electrolyser, wherein the water treatment system has a first purification unit and a second purification unit downstream of the first purification unit, wherein the second purification unit is designed for the separation of portions of the per- and polyfluorinated alkyl compound (PFAS) introduced into the process water.

The invention is already based on the knowledge that previous purification concepts for the treatment of process water of an electrolyser are only suitable to a limited extent for operational practice on an industrial scale for electrolysis plants. On the other hand, purity of the process water from metallic ions or PFAS compound is of particular relevance for the cell components or cell elements of an electrolysis cell, mainly its efficiency and lifetime. Cell degradation can be avoided or decelerated with comprehensive water treatment only.

In an electrolysis plant there are several components of the electrolysis cell or an electrolysis stack that comprise PFAS compounds. Typically, as a standard in PEM electrolysis cells, for example the polymer membrane as cell element is based on the per- and polyfluorinated alkyl compound (PFAS) compounds so far. Considering the polymer membrane material as cell element, the membrane covers the vast majority of applications and impact to the process water contamination. However, the polymer membrane does not limit the present approach of an electrolysis plant concept that integrates a PFAS purification unit according to the invention. Besides this, there maybe also other or further cell elements or cell components or functional elements in an electrolysis plant that also include PFAS compounds. For example, a cell element is a fluorine-free membrane but fluorine-containing ionomer material that is included in the electrodes as cell element that are coated or applied to the polymer membrane. Hence, it is to be understood for the present invention that also a fluorine-free polymer membrane that is coated with a PFAS containing electrode structure is covered from the electrolysis plant concept of the invention for PFAS purification. It maybe also possible to extract any other element or component of electrolyser with PFAS compound that is dissolved into the process water, like from sealing devices of cell elements that contain PFAS.

However, a particular challenge is to provide an integrated plant concept for an efficient "in-situ" or "in-operando" removal of metallic ionic and PFAS compounds in the process water. The treatment of the latter compound is of highest significance, and, it should be avoided by regulations to discharge process water in the environment that contains PFAS as this compound is ecologically very harmful. Nevertheless, so far, a suitable and integrated solution is not known for an industrial scale electrolysis plant. The approaches that are discussed, suggest for example ex-situ process water treatment in a separated downstream process continuously or discontinuously using filtration, oxidation processes, adsorption techniques, biological treatment and the hybrid approach of several techniques. Those appear all to be not suitable and efficient to run an industrial process and operate an electrolysis plant.

As of the latest information available, there are no commercially available PEM electrolysis systems that come with integrated treatment units specifically designed for the removal of PFAS from water waste/purging streams. The invention is to propose an integrated solution for capturing and treating PFAS from various liquid streams of an electrolysis plant, ensuring compliance with environmental standards and norms. This integration as proposed by the electrolysis plant of the invention is applicable for PEM fuel cells as well.

The first global deployment phase of electrolysis technology for hydrogen production is currently experiencing significant momentum and investment. To ensure stable growth in the next phase, efforts are needed in various areas, including technological maturity, cost reduction, and considering the proper environmental impact. The latter requirement is advantageously addressed by the electrolysis plant of the invention. So far, PFAS treatment in the discharge stream in electrolysis plant has not yet been suggested, that would be feasible for commercial implementation.

Accordingly, the invention overcomes the approach previously pursued in conventional electrolysis plants, where no measures for the treatment of PFAS are foreseen. Typically, the concentration of detectable and quantifiable PFAS substances (e.g. PFAS-20) is very low and therefore this is often not considered as a threat to the environment. However, this does not consider that those PFAS are resistant to degradation through chemical, biological, and photolytic processes, why they are considered persistent organic pollutants (POPs). They may accumulate in the environment and become a major threat, especially if the capacity of electrolysers is ramped up in the near future. Additionally, besides those detectable and quantifiable substances, a large number of unknown PFAS might occur in the water discharge streams.

In the electrolysis plant of the invention a comprehensive water treatment system is fully integrated, and that is equipped with a first purification unit and a second purification unit. Both units that are connected and combined synergistic to each other. The second purification unit is designed for the removal of PFAS compound in the process water, whereas the first purification unit is predominantly designed for the removal of metallic ions (cations) and other impurities in the process water that are resulting from oxidation of cell components or cell elements and other metallic components of the electrolysis cell that are introduced in the process water during operation of the electrolyser. With the plant concept of the invention, advantageously electrolysers based on different technologies using different types of PFAS containing membrane, separator or other cell elements like electrode material and gas diffusion layer material can be used. Hence, in the sense of the invention a polymer membrane is to be understood as a proton-conducting membrane in a PEM electrolysis or fuel cell, a separator of an alkaline electrolysis cell or an anion exchange membrane of an AEM electrolysis cell.

In the electrolysis plant hydrogen, oxygen and/or other gases can be produced as gaseous electrolysis products. The incorporation and usage of fluorinated substances, e.g. in polymer membranes, electrode ionomers or sealings is possible as all purge flows of PFAS contaminated process water from the electrolysis plant can be advantageously routed through the second purification unit that is equipped with PFAS treatment elements in which fluorinated organic substances can be quantitatively separated and removed in operation.

In a particular preferred embodiment of the electrolysis plant the first purification unit comprises an inlet line and an outlet line, wherein the outlet line is connected to the electrolyser, and wherein a branch line is provided which branches off from the outlet line and which is connected to the second purification unit on their inlet side.

With this configuration a full integration of the second purification unit for PFAS removal in the process water cycle of the electrolysis plant is suggested. The branch line enables that, during operation, only a defined minor volume flow of process water purified in the first purification unit can be diverted from the outlet line by virtue of the branch pipe connected to said outlet line. Hence, the required major process water flow through the electrolyser can be essentially maintained by a rather weak fluidical coupling of the two process water cycles in the first purification unit and the second purification unit respectively, as the outlet line is still connected to the electrolyser reactant water input. This fluid interconnection enables advantageously coordinated operation and precise adaptation of volume flow through both purification units respectively, while efficiently utilizing the respective purification capacities in view of the concentrations of the impurities in both cycles.

In a preferred embodiment of the electrolysis plant the second purification unit has a return line on the outlet side which is connected to the outlet line.

Hence, with this fluidic connection of the first purification unit with the second purification unit the respective purification cycles are not independent but coupled with each other to improve the overall efficiency of the water treatment system. A high purity level can be obtained to separate any portion of the per- and polyfluorinated alkyl compound in the water. After flowing through the second purification unit and at least partially removing the PFAS components, a return feed into the outlet line is provided. As in general the concentration of the per- and polyfluorinated alkyl compound is rather low in the process water, with this cycle arrangement a leveling-up and accumulation of PFAS portion can be achieved and an increase of purification efficiency.

In another preferred embodiment of the electrolysis plant a valve is provided by means of which the proportion of the process water diverted from the output line to be conveyed through the branch line can be adjusted.

With the valve a defined flow-split can be employed between the output line and the branch line. Typically, only a minor flow of the process water in the output line is separated and fed into the branch line to be supplied to the second purification unit for PFAS removal. A flow-split between 1% and 10% of the volume flow in the output line is recommended that is effectuated by the valve position. Accordingly, in the water treatment system the capacity of the second purification unit can be configurated at least one order of magnitude smaller than the capacity of the first purification unit.

In another preferred embodiment of the electrolysis plant the second purification unit is equipped with a discharge line via which water that is freed from per- and polyfluorinated alkyl compound (PFAS) can be discharged.

This discharge flow consists of water of high purity and contains essentially no PFAS compound. This water stream is cleaned from PFAS and can be discarded without the risk of contaminating the environment. Typically, there is a small flow of purified water that can be redirected and cycled back into the electrolyser as reactant water or for cooling purposes.

In a particular preferred embodiment of the electrolysis plant an intermediate storage tank is provided with a container volume, whereas a storage supply line and a storage discharge line is connected to the storage tank, such that the storage tank is arranged in parallel to the first purification unit in such a way that the storage supply line is connected to the inlet line and the storage supply line is connected to the branch line.

The storage tank is very advantageous to collect purified water and buffer a sufficient volume. Inside this volume, PFAS containing water that is collected discontinuously, can be stored for a certain time. This buffer volume is sufficiently large to store the largest amount of water that may emerge during a maintenance or service procedure of the electrolysis plant during shutdown.

In a further preferred embodiment of the electrolysis plant the first purification unit comprises an ion exchanger.

To remove the ions that are present in the process water, in the water treatment systems ion exchanger is used at least in the first purification unit as an ion-selective element. It is possible that in several purification circuits or purification stages, the ions in the process water are removed. Ion exchange is a reversible exchange of an ion species present in an insoluble solid with another charge of the same charge present in a solution surrounding the solid. Ion exchange is used in the softening or demineralization of water, in the purification of chemicals, and in the separation of substances.

Ion exchange usually describes a process of purification of aqueous solutions using a solid polymeric ion exchange resin. More specifically, the term encompasses a variety of processes in which ions are exchanged between two electrolytes. In addition to being used to purify drinking water, the technique is often used to purify and separate a variety of industrially and medically important chemicals. Although the term usually refers to applications of synthetic (man-made) resins, it can also include many other materials such as soil.

Typical ion exchangers are ion exchange resins (functionalized porous or gel polymer), zeolites, montmorillonite, clay and soil humus. Ion exchangers are either cation exchangers that exchange positively charged ions (cations) or anion exchangers that exchange negatively charged ions (anions). There are also amphoteric exchangers that are able to exchange both cations and anions at the same time. However, the simultaneous exchange of cations and anions is often performed in mixing beds containing a mixture of anion and cation exchange resins, or by passing the solution through several different ion exchange materials.

Ion exchange is a reversible process, and the ion exchanger can be regenerated or loaded with desired ions by washing an excess of these ions. Advantageously, both anion and cation exchange are available for the water treatment with the ion exchanger that is incorporated in the first purification unit.

In a particular preferred embodiment of the electrolysis plant, the second purification unit comprises a reverse osmosis device.

Besides other methods that would encourage efficient removal of PFAS in the second purification unit, it has been found that applying reverse osmosis is particularly beneficial for water treatment of process water in an electrolysis plant. Reverse osmosis is a physical process of membrane technology for the concentration of substances dissolved in liquids, in which the natural osmosis process is reversed with pressure.

The medium in which the concentration of a particular substance is to be reduced, here the removal of PFAS compound from electrolysis process water, is separated by a semipermeable membrane from the medium in which the concentration is to be increased. This is subjected to pressure that must be higher than the pressure created by the osmotic trend to balance concentration. This allows the molecules of the solvent to migrate against their "natural" osmotic direction of propagation. The process pushes them into the compartment, in which dissolved substances are less concentrated.

The osmotic membrane, which only allows the carrier liquid (solvent) to pass through and retains the solutes, must be able to withstand these high pressures. If the pressure difference more than compensates for the osmotic gradient, the solvent molecules fit through the membrane like a filter, while the "impurity molecules" are retained. In contrast to a classic membrane filter, osmosis membranes do not have continuous pores. Rather, the ions and molecules migrate through the membrane by diffusing through the membrane material. The solution-diffusion model describes this process.

The osmotic pressure increases with increasing difference in concentration. If the osmotic pressure becomes equal to the applied pressure, the process comes to a standstill. There is then an osmotic equilibrium. A steady outflow of the concentrate can prevent this. At the concentrate outlet, the pressure is either controlled by a pressure regulator or used by a pressure exchanger to build up the pressure required in the inlet of the system. Pressure exchangers are very effective in reducing the operating costs of a reverse osmosis system through energy recovery.

In operation the crystallization (precipitation) of the solute in the membranes must be prevented. This can be advantageously achieved by adding antiscaling agents or acids. Anti-coating agents are polymeric compounds based on phosphate or maleic acid, which enclose the crystallites that form and thus prevent crystalline precipitation from occurring on the membrane. However, cleaning of the membrane may still be necessary.

In a further preferred embodiment of the electrolysis plant the second purification unit comprises an ion exchanger which is connected to a retentate line of the reverse osmosis device.

It is beneficial to apply in the second purification unit an ion exchanger in the retentate line of the reverse osmosis device. With this a PFAS treatment by ion exchange is incorporated for the reverse osmosis retentate. It benefits from an increase of PFAS concentration in the retentate caused by the reverse osmosis. As a result, the eluate flow of process water is virtually free from PFAS and may also be discarded or reintroduced in the electrolysis process.

In another preferred embodiment of the electrolysis plant a control valve is provided for regulating the inlet pressure of the reverse osmosis device, which is connected to the retentate line.

With this additional measure a control of the inlet pressure for the reverse osmosis is advantageously implemented. The pressure control valve is adjustable and can be an integral part of an overarching pressure control unit that is provided and that also includes a pump to provide the required pressure to drive the reverse osmosis process.

It is possible to include further separation processes for the selective PFAS removal by incorporating and combining respective purification devices in the second purification unit.

Thus, in a further preferred embodiment of the electrolysis plant the second purification unit is equipped in such a way that electrodialysis, reverse osmosis, ion exchange, adsorption, flocculation and sedimentation, nanofiltration, heat treatment, advanced oxidation process or combinations thereof can be carried out, such that removal of per- and polyfluorinated alkyl (PSAS) compound from the process water can be effectuated.

The present disclosure and examples of the invention will be more readily appreciated by reference to the following detailed description when being considered in connection with the accompanying drawings in which:
- FIG 1: schematically shows an electrolysis plant including a water treatment system;
- FIG 2: shows an electrolysis plant with an enhanced water treatment system for PFAS;
- FIG 3: illustrates an electrolysis plant with further improved water treatment system; and
- FIG 4: depicts details of a purification unit as part of the water treatment system.

Identical reference signs have the same meaning in the figures.

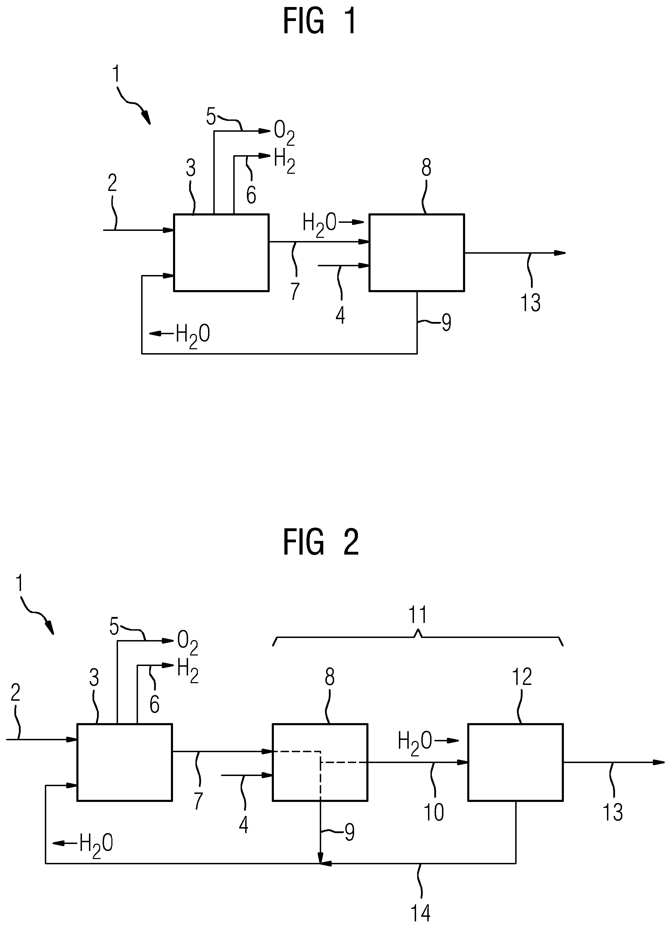

The global first deployment phase of electrolysis technology for hydrogen production is currently experiencing significant momentum and investment. To ensure stable growth in the next phase, efforts are needed in various areas, including technological maturity, cost reduction, and considering the proper environmental impact. PFAS treatment and removal in the discharge stream in electrolysis remains generally under discussion and has not yet been commercially implemented. The common configuration of electrolysis plant 1 can be seen in FIG 1 in a schematical representation. FIG 1 shows a electrolysis plant 1 including a conventional water purification unit 8. The electrolysis plant 1 comprises an electrolyser 3 and a DC power supply 2. A feed line 4 for demineralized water is connected to the water purification unit 8 to feed water into the purification unit 8 during operataion of the electrolyser. By virtue of an oulet line 9 that is connected to the purification unit 8, reactant water H₂O can be provided to the electrolyser 3. Part of the reactant water H₂O is split into oxygen O₂ as anodic product gas 5 and hydrogen H₂ as cathodic product gas 6. Another part of the water is used for cooling purposes and is feed into the water purification unit 8 by virtue of the inlet line 7. The water purification unit 8 is equipped with an conventional ion exchanger to extract or remove the ions that are present in the process water. However, the use of per- and polyfluoroalkyl substances (PFAS) in PEM and Alkaline related electrolysers 3, as well as in their up- and downstream processes, presents a significant challenge. Additionally, PFAS are utilized in Membrane Electrode Assemblies (MEA), sealing materials, coating materials, gas separation membranes, and other parts. Hence those environmentally harmful PFAS substances are introduced into the process water during operation and released from the electrolysis plant 1 by virtue of the discharge line 13 that is connected to the water purification unit.

Therefore, FIG 1 shows a typical setup of conventional electrolysis plant 1. During operation with the help of electrical DC power supply 2 reactant water H₂O or other substances are split into the valuable products 5, 6, for instance hydrogen H₂ and oxygen O₂. Most types of electrolysers 3 are based on an aqueous fluid which has to be treated to counteract the accumulation of impurities. Therefore, an aqueous stream is sent to a water treatment unit 8 by virzue of the inlet line 7 in which the water is cleaned and re-routed into the electrolyser 3 via oulet line line 9. It is advantageous to feed the water H₂O, that is compensated for the consumption and loss of the electrolyser 3, directly into the water purification unit 8 via feed line line 4, since most water sources are not sufficiently pure to use it directly inside the electrolyser 3. Typically, there is a water flow that must be discarded from the water purification unit 8. This stream contains impurities. However, their PFAS-concentrations are exceptionally low and can escape into the environment via discharge line 13 since no measures are implemented in a conventional electrolysis plants 3 to capture or treat.

Disadvantageous, in the electrolysis plant 1 of FIG 1 no specific measures for treatment of PFAS are foreseen. Typically, as mentioned above, the concentration of detectable and quantifiable PFAS substances in the process water (e.g. PFAS-20) is rather low and therefore this is often not considered as a threat to the environment. However, this does not consider that those PFAS are higly resistant to degradation through chemical, biological, and photolytic processes, why they are considered persistent organic pollutants (POPs). They may accumulate in the environment and become a major threat, especially if the capacity of electrolysis plants 1 are ramped up in the near future. Additionally, besides those detectable and quantifiable substances, a large number of unknown PFAS might occur in the water waste streams that are purged through the discharge line 13.

In FIG 2 shows an electrolysis plant that is equipped with an enhanced water treatment system 11 that is specifically enabled for efficient PFAS treatment and removal.

Additionally, to a conventional water purification unit 8 a water treatment system 11 is provided that comprises a first purification unit 8 and a second purification unit 12 that both are integrated uin the electrolysis plant 1. The second purification unit 12 is dedicated for PFAS treatment and removal and is added in this way, that every purge flow from an electrolyser 3 due to gas analytical, control, balancing, etc is routed to it.

This is being realized in the electrolysis plant 1 with a water treatment system 11 which is connected to the process water circuit of the electrolyser 3. The water treatment system 11 has a first purification unit 8 and a second purification unit 12 downstream of the first purification unit 8. The second purification unit is specifically designed for the separation of portions of the per- and polyfluorinated alkyl compound (PFAS) that are introduced into the process water during operation. FIG 2 shows an example, where only one purge stream from the water treatment system (8) is directed to the PFAS treatment unit 12 by virtue of the branch line 10. The water stream 13 is cleaned from PFAS and can be discarded without the risk of contaminating the environment. Typically, there is a small flow of cleaned water that can be redirected from the second purification unit 12 via return line 14 into the electrolyser 3. The first purification unit 8 comprises an inlet line 7 and an outlet line 9, wherein the outlet line 9 is connected to the electrolyser 3, and wherein a branch line 10 is provided which branches off from the output line 9 and which is connected to the second purification unit 12 on their inlet side. The second purification unit 12 comprises a return line 14 at its outlet side, which is connected to the outlet line 9, such that at a connection point the return flow of water that is extracted from the second purification unit 12 is fed into the outlet line 9 of the first purification unit. As an advantageous feature of the electrolysis plant 1 a valve - not shown in detail in FIG 2 - is provided by means of which the proportion of the process water diverted from the output line 9 to be conveyed through branch line 10 can be adjusted precisely.

One central property of the operational concept of the electrolysis plant 1 is that the capacity of the PFAS treatment unit realized with second purification unit 12 is at least one order of magnitude smaller than the capacity of the conventional water treatment unit realzed with first purification unit 8. Two orders of magnitude are even better for this split. In other words, if the volume flow to the conventional water treatment system included in the first purification unit 8 through inlet line 7 is 1 m³/h, the volume flow to the second purification unit 12 via branch line 10 is at most 100 l/h, or better at most 10 l/h.

It is to be understood, that FIG 2 depicts only one possible example configuration of an improved electrolysis plant 1 with integrated and improved water treatment system 11. It is also possible that other water streams, like condensates from units for cooling or compression can be routed to the first purification unit 8 or the second purification unit 12 for PFAS removal or extraction. Moreover, the first purification unit 8, which is rather designed for conventional water treatment and purification does not necessarily consist of only one central unit or device. It is also possible, for example, that ion exchangers may be distributed inside an electrolysis plant 1 at selected positions. These also count as parts of the first purification unit 8 and the sum of all volume flows through these units are at least one order of magnitude larger than the flow to the central second purification unit 12 for separation of portions of per- and polyflourinated alkyl compound (PFAS) that are introduced into the process water.

The reason for the flow through the PFAS treatment realized with second purification unit 12 being much smaller compared to the conventional water treatment is found in the small PFAS concentrations. PFAS can only be quantitatively treated in an economical way if the volume flow is small. However, the small capacity of the second purification unit 12 leads to certain challenges. During maintenance works relatively large amounts of PFAS containing water may have to be treated. For example, if it becomes necessary to exchange parts of the electrolysis plant 1 like valves, pumps or stacks, a relatively large volume of PFAS containing water arises and has to be treated. It would be uneconomic to design the second purification unit 12 large enough to treat all these large water volumes that accrue.

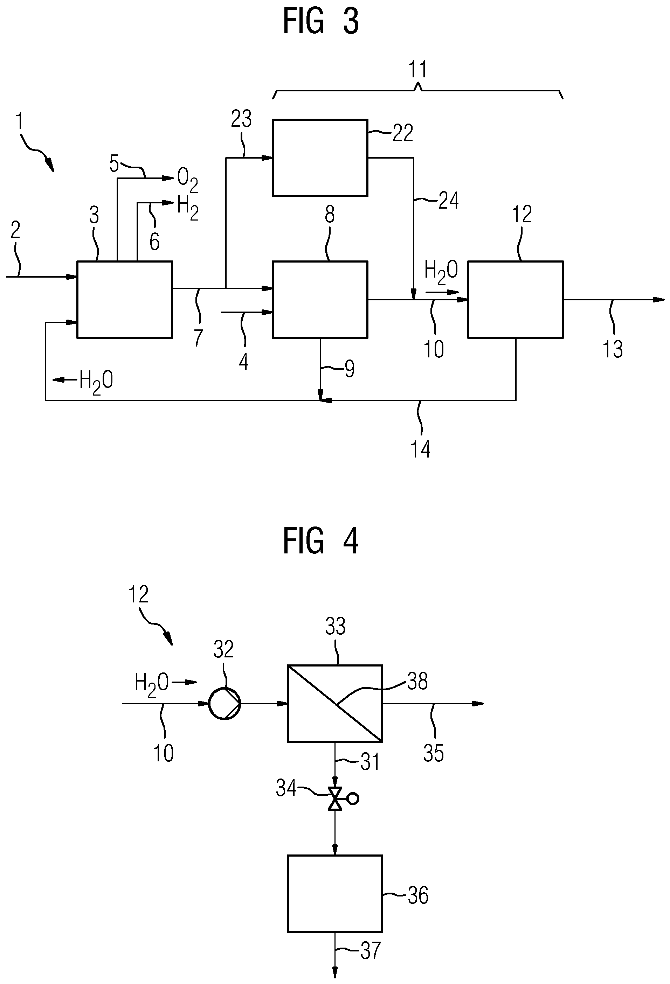

Therefore, as another particular advantageous enhancement of the electrolysis plant 1, a buffer volume is foreseen by integrating an intermediate storage tank 22 into the water treatment system 11 of the electrolysis plant 1, as illustrated in FIG 3. The intermediate storage tank 22 is provided with a suitable container volume. A storage supply line 23 and a storage discharge line 24 are connected to the storage tank 22, such that the storage tank 22 is arranged in parallel to the first purification unit 8 in such a way that the storage supply line 23 is connected to the inlet line 7 and the storage discharge line 24 is connected to the branch line 10. Inside this buffer volume provided by the storage tank 22, PFAS containing water that is collected discontinuously, can be stored for a certain time. The buffer volume of the storage tank 22 is sufficiently large to store the largest amount of water that may emerge during a temporary maintenance or service interruption of the electrolyser 3.

During an maintenance interruption or the like, PFAS containing water that is contained inside the storage tank 22 can be pumped and ciculated through the second purification unit 12 continuously within the days, weeks or even months of an interruption as needed. This multi-cycling operational mode will significantly improve the purity level and removal of PFAS accordingly. Additional buffer volumes may be added temporarily by adding addional storage tanks 22 if maintenance works are planned. It is also possible, that the storage tank 22 is detachable and replaceable such that a filled storage tank 22 can be transported to another location to treat the PFAS containing water separately. Hence, another empty storage tank 22 can be flanged and integrated into the water treatment system 11 again as required. It is also possible to - at least temporarily - utilize existing volumes of the electrolysis plant 1 as buffer volume. For example, separation vessels, degassing vessels or even dipping pans.

There are different techniques for the treatment of PFAS containing water. Which technology is best suited depends on the specific application, so there may be different approaches. As an example, FIG 4 depicts in a simplified scheme functional elements of the second purification unit 12, designed for PFAS removal, as part of the water treatment system 11.

Here, the second purification unit 12 comprises a reverse osmosis device 33 with a membrane 38, a retentate line 31 and a permeate line 35. An ion exchanger 36 is connected to the retentate line 31 of the reverse osmosis device 33. Further, a control valve 34 is provided for regulating the inlet pressure of the reverse osmosis device 33, which is connected to the retentate line 31. In the branch line 10 a pressure pump 32 is installed that is located upstream of the membrane 38 to increase the pressure of the inlet flow of water. In this example, during operation, the PFAS containing water inlet flow is first treated in the reverse osmosis device 33. Here, the pressure of the water is first increased with the pump 32 to provide the driving force for the forced transport through the membrane 38. Reverse osmosis is well suited because both ionic and non-ionic PFAS compounds could not pass the membrane 38, and therefore the permeate flow that is directed through the permeate line 35 is essentially free of PFAS and can be released into the environment. Some additional measures are needed, for example to control the feed pressure of the reverse osmosis process, a pressure control valve 34 is foreseen that can be adjusted in order to optimize the retention of PFAS compound in the water H₂O. In FIG 4 a second technique for the PFAS treatment is placed for the reverse osmosis retentate and is advantageously combined with the reverse osmosis devive 33. This is an ion exchanger 36 installed in the retentate line 31 downstream of the membrane 28. Its efficient operation benefits from an increase of PFAS concentration caused by the upstream reverse osmosis. As a result, the eluate flow 37 downstream the ion exchanger 36 is virtually free from PFAS and may also be discarded or otherwise reused.

The set-up depicted in FIG 4 is simplified in many aspects. For example, the pressure control valve 34 may need a recirculation line - not shown in FIG 4 - to prevent damage of the reverse osmosis device 33. Moreover, from time to time a reverse flow through the membrane 38 is needed to counteract a blocking of the membrane 38. For this, additional valves are needed. Moreover, the ion exchanger 36 will usually consist of more than one ion exchanger beds.

The purified streams can be discharged into the environment if there are no detectable residues of PFAS, like in the permeate flow 35 or the eluate flow 37. Then, compared to FIG 2 or FIG 3 when being operationally integrated, the permatete flow 35 of FIG 4 could be discharged through the discharge line 13. Correspondingly, it is possible to reroute the eluate flow 37 or part of the eluate flow 37 into the return line 14. However, both these flows the eluate flow 37 and the permeate flow 35 may be sufficiently clean to reroute them both into the electrolysis plant 1 realizing a "zero waste" electrolysis system and operation.

It should be mentioned that it is possible to incorporate and combine in the second purification unit 12 different purification and filtering techniques. Thus, the second purification unit 12 can be equipped in such a way that electrodialysis, reverse osmosis, ion exchange, adsorption, flocculation and sedimentation, nanofiltration, heat treatment, advanced oxidation process or combinations thereof can be carried out, such that removal of per- and polyfluorinated alkyl (PFAS) compound from the process water can be effectuated completely.

## Claims

1. Electrolysis plant (1) comprising an electrolyser (3) for the decomposition of reactant water (H₂O) into hydrogen (H₂) and oxygen (O₂) as product gases (5, 6), wherein the electrolyser (3) comprises a number of electrolysis cells with a cell element, in particular a polymer membrane, containing a per- and polyfluorinated alkyl compound (PFAS), and comprising a water treatment system (11) which is connected to the process water circuit of the electrolyser (3), wherein the water treatment system (11) has a first purification unit (8) and a second purification unit (12) downstream of the first purification unit (8), wherein the second purification unit is designed for the separation of portions of the per- and polyfluorinated alkyl compound (PFAS) introduced into the process water.

2. Electrolysis plant (1) according to claim 1, wherein the first purification unit (8) comprises an inlet line (7) and an outlet line (9), wherein the outlet line (9) is connected to the electrolyser (3), and wherein a branch line (10) is provided which branches off from the output line (9) and which is connected to the second purification unit (12) on their inlet side.

3. Electrolysis plant (1) according to claim 2, wherein the second purification unit (12) has a return line (14) at the outlet side which is connected to the outlet line (9).

4. Electrolysis plant (1) according to claim 2 or 3, in which a valve is provided by means of which the proportion of the process water diverted from the output line (9) to be conveyed through the branch line (10) can be adjusted.

5. Electrolysis plant (1) according to anyone of the claims 2, 3 or 4, in which the second purification unit (12) is equipped with a discharge line (13) via which water (H₂O) freed from per- and polyfluorinated alkyl compound (PFAS) can be discharged.

6. Electrolysis plant (1) according to anyone of claims 2 to 5, wherein an intermediate storage tank (22) is provided with a container volume, in which a storage supply line (23) and a storage discharge line (24) are connected to the storage tank (22), such that the storage tank (22) is arranged in parallel to the first purification unit (8) in such a way that the storage supply line (23) is connected to the inlet line (7) and the storage discharge line (24) is connected to the branch line (10).

7. Electrolysis plant (1) according to anyone of the preceding claims, wherein the first purification unit (8) comprises an ion exchanger.

8. Electrolysis unit (1) according to anyone of the preceding claims, wherein the second purification unit (12) comprises a reverse osmosis device (33).

9. Electrolysis plant (1) according to claim 8, wherein the second purification unit (12) comprises an ion exchanger (36) which is connected to a retentate line (31) of the reverse osmosis device (33).

10. Electrolysis plant (1) according to claim 9, in which a control valve (34) is provided for regulating the inlet pressure of the reverse osmosis device (33), which is connected to the retentate line (31).

11. Electrolysis plant (1) according to any of the preceding claims, in which the second purification unit (12) is equipped in such a way that electrodialysis, reverse osmosis, ion exchange, adsorption, flocculation and sedimentation, nanofiltration, heat treatment, advanced oxidation process or combinations thereof can be carried out, such that removal of per- and polyfluorinated alkyl (PFAS) compound from the process water can be effectuated.
